Europäisches Patentamt

European Patent Office

Office européen des brevets

(11) Publication number: **0 135 929**
**B1**

# EUROPEAN PATENT SPECIFICATION

(45) Date of publication of patent specification: **07.12.88**

(21) Application number: **84111421.8**

(22) Date of filing: **25.09.84**

(51) Int. Cl.⁴: **B 60 J 5/04,** B 60 R 16/00, H 01 R 35/02

(54) Structure of wiring in side door of motor vehicle.

(30) Priority: **26.09.83 JP 148660/83 u**
**29.09.83 JP 151081/83 u**

(43) Date of publication of application:
**03.04.85 Bulletin 85/14**

(45) Publication of the grant of the patent:
**07.12.88 Bulletin 88/49**

(84) Designated Contracting States:
**DE FR GB**

(56) References cited:
FR-A-1 267 803
FR-A-2 337 446
US-A-2 416 118
US-A-3 053 564
US-A-3 629 783

(73) Proprietor: **TOYOTA JIDOSHA KABUSHIKI KAISHA**
**1, Toyota-cho Toyota-shi**
**Aichi-ken 471 (JP)**

(72) Inventor: **Arai, Hiroshi**
**c/o Toyota Jidosha Kabushiki Kaisha 1, Toyota-cho**
**Toyota-shi Aichi-ken (JP)**
Inventor: **Fukushima, Kazunobu**
**c/o Toyota Jidosha Kabushiki Kaisha 1, Toyota-cho**
**Toyota-shi Aichi-ken (JP)**

(74) Representative: **Grams, Klaus Dieter, Dipl.-Ing.**
**et al**
**Patentanwaltsbüro Tiedtke-Bühling-Kinne-Grupe-Pellmann-Grams-Struif Winter-Roth**
**Bavariaring 4**
**D-8000 München 2 (DE)**

## Description

This invention relates to a side door hinge mechanism for a motor vehicle according to the pre-characterizing portion of claim 1.

In most cases, the side door in a motor vehicle, e.g. passenger car has heretofore been installed in a manner to be rotatable about a hinge affixed to a vehicle body for opening or closing. In order to allow an occupant of the motor vehicle to open or close the side door for getting on or off the motor vehicle, a door opening angle corresponding to the total length of the side door is required. At this time, when a space at the side of the motor vehicle is small, there are many cases where it is difficult for the occupant to get on or off the vehicle because the side door cannot be opened sufficiently.

FR—A—1 267 803 shows a side door hinge mechanism for a motor vehicle, wherein a quadric crank chain comprises a front rotary link interconnecting a rotary center on a vehicle body and a rotary center on a side door and a rear rotary link interconnecting another rotary center on the vehicle body and another rotary center on the side door.

For this side door hinge mechanism a required space at the side of the side door can be reduced while a desired space around feet of the occupant is secured. In consequence, even when the space at the side of the door is small, the occupant can open or close the side door to get on or off the vehicle.

Now, in general, in the side door of a motor vehicle, there may be provided a power window regulator, a device for controlling the power window regulator, an electromagnetic lock device and a switch for operating the lock device. In this case the side door and a vehicle body are electrically connected to each other through a wire harness.

When a side door utilizing hinge mechanism comprising the quadric crank chain and a vehicle body are electrically connected to each other the aforesaid wire harness, the inner end portion of the side door, differing from the side door having a conventional ordinary hinge mechanism, is greatly separated from the vehicle body during the opening of the side door, so that it is difficult to provide a route for the wire harness.

When the vehicle body and the side door are connected via the wire harness, the working stroke of the side door during the opening or closing is larger than that of the side door having the conventional ordinary hinge mechanism, whereby it becomes difficult to house the wire harness during the closing of the door.

Further, the wire harness is installed with at least a portion thereof being exposed in a compartment, because of the workability of installation, and that results in the problem that the exposed portion should be rigged in order to match with the coloring of the interior of the compartment and the like.

To absorb the great opening and closing strokes of the side door by the wire harness, there may be proposed to use electric wire and molded parts, which are of special shapes. In this case, the cost is increased and the working of installation becomes harder. For example, US—A—3 053 564 proposes molded parts to surround the wire harness between a side door and a vehicle body of a vehicle utilizing a conventional ordinary side door hinge mechanism. Furthermore, to obviate the above-described disadvantages, there may be proposed that opposing electric contact points, which are brought into contact with each other when the side door is closed, are provided on the side door and the vehicle body, with no wire harness being used. In this case, such problems are presented that it is difficult to compose circuits of a multiplicity of types and the cost is increased.

It is the object of this invention to provide a side door hinge mechanism for a motor vehicle, wherein great opening and closing strokes are obtainable with no wiring and molded parts of special types being used, and wherein a wire harness is reliably housed during opening and closing the side door.

Any special rigging and the like should not be necessary and the wiring should be completed by easy working.

This object is achieved by a side door hinge mechanism for a motor vehicle comprising the features of the characterizing portion of claim 1.

According to claim 2 a portion of the wire harness passed through the rotary link which is fixed to the vehicle body, is offset from the rotary link in the vertical direction of the vehicle body.

The offset value of the fixed portion of the wire harness is according to claim 3 determined to the degree where, during rotation of the rotary link about the rotary center on the vehicle body, when the wire harness is twisted, the resultant twist can be absorbed.

According to claim 4 said rotary link uses a point on a front pillar and a point on the side door on the compartment side as rotary centers.

According to claim 5 the fixed portion of said wire harness is fixed on the front pillar.

According to claim 6 an interior trim material is provided to cover the rotary link, on the compartment side, and the wire harness is wired through a closed section formed between a U-shape of the interior trim material and the rotary link.

According to claim 7 the rotary link has U-shape in cross section open to the compartment side and said wire harness is wired through said U-shape.

According to claim 8 the rotary link is a flat plate which blocks an opening of said interior trim material being of a U-shape in cross section.

The wire harness can be reliably housed in the rotary link during the closing of the side door and it can be easily and quickly installed together with the interior trim material of the rotary link.

In the following the invention is described with reference to the drawings, in which:

Fig. 1 is a schematic sectional view showing an embodiment of the structure of the wiring in the side door of a motor vehicle;

Fig. 2 is a perspective view showing the essential portions of the above embodiment;

Fig. 3 is a side view partially showing the motor vehicle, to which the present invention is to be applied; and

Fig. 4 is a schematic enlarged sectional view taken along the line IV—IV in Fig. 3, showing an embodiment of the structure of the wiring in the side door of a motor vehicle.

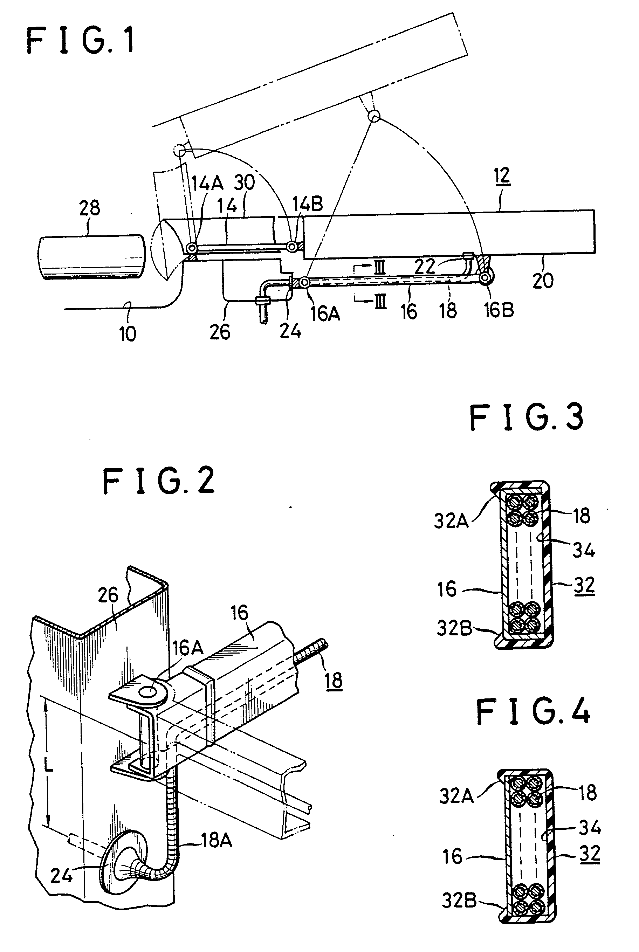

As shown in Figs. 1 and 2, according to this embodiment, in a structure of a wiring in a side door of a motor vehicle including a wire harness 18 for electrically connecting a vehicle body 10 to the side door 12 having a hinge mechanism, wherein a quadric crank chain comprises: a rotary link 14 interconnecting two points disposed at the forward sides of the vehicle body 10 and the side door 12 as rotary centers 14A and 14B out of four points including two points disposed on the vehicle body 10 and spaced apart from each other in the longitudinal direction of the vehicle body 10 and two points disposed on the side door 12 and spaced apart from each other in the longitudinal direction of the side door 12; another rotary link 16 interconnecting two points disposed at the rear sides as rotary centers 16A and 16B; a portion between the two points 14A and 16A on the vehicle body 10; and another portion between the two points 14B and 16B on the side door 12; the wire harness 18 is wired, extending through the rotary link 16.

The rotary links 14 and 16 are each formed into a U-shape in cross section, and the wire harness 18 is wired, extending through the interior of the U-shape of one 16 of the rotary links.

A portion of the wire harness 18 on the side of the side door 12 is extended from the rotary link 16, passed through a grommet 22 secured to an inner panel 20 of the side door 12 and connected into the side door 12.

Furthermore, at a position of the end of the rotary link 16 on the side of the vehicle body 10 the wire harness 18 is suspended downwardly from the rotary link 16, offset a distance L from the rotary link 16, passed through a grommet 24 and connected into the vehicle body 10.

The offset value L of the grommet 24 with respect to the rotary link 16 is determined to the degree where, during the rotation of the rotary link 16 about the rotary center 16A, when the wire harness 18 is twisted, the resultant twist can be absorbed.

In the drawings, designated at 26 is a front pillar, 28 a front wheel and 30 a movable fender rotatable with the rotary link 14.

In this embodiment, the wire harness 18 electrically connecting the vehicle body 10 to the side door 12 is wired, extending through the U-shape in cross section of the rotary link 16, so that the great opening and closing strokes of the side door 12 can be satisfactorily followed to interconnect the vehicle body 10 and the side door 12, and the wire harness 18 can be reliably housed in the rotary link 16 during the closing of the door.

Particularly, in this embodiment, the grommet 24 has been disposed downwardly of the rotary link 16 in a manner to be offset from the rotary link 16, the twist can be absorbed, which, due to the rotation of the side door 12, is generated in a suspended portion 18A of the wire harness 18 suspended from the end portion of the rotary link 16 on the side of the vehicle body 10.

Additionally, in the above embodiment, the wire harness 18 has been wired only through the rotary link 16, however, the wire harness 18 may be wired only through the rotary link 14 or through the both rotary links 14 and 16.

Furthermore, the grommet 24 on the vehicle body 10 is disposed downwardly of the rotary link 16 in a manner to be offset from the rotary link 16, however, the grommet 24 may be disposed upwardly of the rotary link 16 in a manner to be offset from the rotary link 16.

Further, the grommets 22 and 24 have been provided for protecting and fixing the portions of the wire harness 18 extending through the side door 12 and the vehicle body 10, however, protectors other than the grommets may be provided.

Furthermore, in the above embodiment, each rotary link has been formed into a U-shape in cross section, through which the wire harness 18 has been wired, however, the present invention need not necessarily be limited to this, and each rotary link may be formed into a closed section, through which the wire harness 18 may be wired.

In this case, it is advantageous that the wire harness 18 can be further reliably protected.

Furthermore, in the above embodiment, the pairs of two points on the vehicle body and the side door, which are spaced apart from each other in the longitudinal direction have been used as the rotary centers, however, the present invention need not necessarily be limited to this, and pairs of two points on the vehicle body or the side door, which are spaced apart from each other may be used as the rotary center only if these rotary centers can form the quadric crank chain.

Description will hereunder be given of a second embodiment of the present invention with reference to the drawings.

In this embodiment, in a structure of a wiring in a side door of a motor vehicle, as shown in Fig. 1, including a wire harness 18 for electrically connecting a vehicle body 10 to the side door 12 having a hinge mechanism, wherein a quadric crank chain comprises: a rotary link 14 interconnecting two points disposed at the forward sides of the vehicle body 10 and the side door 12 as rotary centers 14A and 14B out of four points including two points disposed on the vehicle body 10 and spaced apart from each other in the longitudinal direction of the vehicle body 10 and two points disposed on the side door 12 and spaced apart from each other in the longitudinal direction of the side door 12; another rotary link 16 interconnecting two points disposed at the rear sides as rotary centers 16A and 16B; a portion between the two points 14A and 16A on the vehicle body 10; and another portion between the two points 14B and 16B on the side door 12; as shown in Fig. 3, an interior trim material 32 being of a substantially U-shape in cross section open to the outside of the compartment and having an upper and a lower pawl 32A and 32B engageable with the top and bottom ends of the outer surface of one 16 of the rotary links on the forward end thereof in the direction to the outside of the compartment is secured to the rotary link 16, covering the surface of the rotary link 16 on the compartment's side, and the wire harness 18 is wired, extending through a closed section 34 formed between the U-shape of the interior trim material 32 and the rotary link 16.

The rotary link 16 is formed into the U-shape in cross section open to the compartment's side and the wire harness 18 is wired in and affixed to the U-shape. The opening of the U-shape of the rotary link 16 is blocked by the interior trim material 32 being of a U-shape in cross section.

Here, the wire harness 18 is previously formed into a ribbon shape having a section substantially coinciding with the section of the aforesaid closed section 34.

In this embodiment, the wire harness 18 electrically connecting the vehicle body 10 to the side door 12 is wired, extending through the closed section 34 formed by the rotary link 16 and the interior trim material 32, so that the great opening and closing strokes of the side door 12 can be satisfactorily followed to interconnect the vehicle body 10 and the side door 12, the wire harness 18 can be reliably housed in the closed section 34 formed between the rotary link 16 and the interior trim material 32 during the closing of the door, and, in installing the wire harness 18, the interior trim material 32 can be mounted to the rotary link 16 by use of pawls 32A and 32B thereof by one touch operation to cover and protect the wire harness 18 and improve the appearance of the interior of the compartment.

Particularly, in this embodiment, the interior trim material 32 additionally functions as the rigging material for the wire harness 18, so that the rigging material can be dispensed with as compared with the case where the wire harness 18 is wired as being exposed.

Here, in the above embodiment, the rotary link 16 has been formed into the substantially U-shape in cross section open to the compartment's side, however, the present invention need not necessarily be limited to this, and any arrangement may be adopted only if the rotary link 16 can form the closed section 34 in cooperation with the interior trim material 32 being of the substantially U-shape in cross section. In consequence, as shown in Fig. 4, the rotary link 16 may be formed into a flat plate-shaped member.

In the above embodiment, the wire harness 18 has been wired in the rotary link 16, however, the wire harness 18 may be wired only through the rotary link 14 or through the both rotary links 14 and 16.

## Claims

1. A side door hinge mechanism for a motor vehicle comprising
   a quadric crank chain having a first rotary link (14) interconnecting first rotary centers (14A, 14B), one of them being disposed on a side door (12) and the other of them being disposed on a vehicle body (10),
   and a second rotary link (16) interconnecting second rotary centers (16A, 16B), one of them being disposed on said side door (12) and the other of them being disposed on said vehicle body (10),
   said first and second rotary centers (14A, 16A) on said vehicle body (10) and said first and second rotary centers (14B, 16B) on said side door (12) being spaced from each other in the longitudinal direction of said vehicle body (10) respectively said side door (12) characterized in
   that a wire harness (18) for electrically connecting said vehicle body (10) and said side door (12) is wired through at least one of said rotary links (14, 16).

2. A side door hinge mechanism according to claim 1, wherein a portion of said wire harness (18) extending through said at least one rotary link (14, 16) and fixed to said vehicle body (10) is offset by an offset value L from said at least one rotary link (14, 16) in the vertical direction of said vehicle body (10).

3. A side door hinge mechanism according to claim 2, wherein said offset value L corresponds to the degree to which a twist can be absorbed which is generated in said wire harness (18) during rotation of said at least one rotary link (14, 16) about said correspondent rotary center (14A, 16A) on said vehicle body (10).

4. A side door hinge mechanism according to claim 1, 2 or 3, wherein said at least one rotary link (14, 16) has its rotary centers (14A, 14B, 16A, 16B) on a front pillar (26) and on a point on a compartment side of said side door (12).

5. A side door hinge mechanism according to one of the claims 1 to 4, wherein the vehicle body side end portion of said wire harness (18) is fixed respectively on said front pillar (26).

6. A side door hinge mechanism according to one of the claims 1 to 5, wherein an interior trim material (32) being of a substantially U-shape in cross section open to the outside of said compartment and having an upper and a lower pawl (32A, 32B) engageable with a top and a bottom end of the outer surface of said at least one rotary link (14, 16) on the forward end thereof in the direction to the outside of said compartment is secured to said at least one rotary link (14, 16), covering the surface of said at least one rotary link (14, 16) on said compartment side, and said wire harness (18) is wired through a closed section (34) formed between said interior trim material (32) and said at least one rotary link (14, 16).

7. A side door hinge mechanism according to claim 6, wherein said at least one rotary link (14, 16) is formed into a U-shape in cross section open to said compartment side and said wire harness (18) is wired through said U-shape.

8. A side door hinge mechanism according to claim 6, wherein said at least one rotary link (14, 16) is formed as a flat plate which blocks the opening of said interior trim material (32) being of a U-shape in cross section.

## Patentansprüche

1. Seitentür-Gelenkmechanismus für ein Kraftfahrzeug
—mit einer quadratischen Kurbelkette, die ein erstes Drehgelenk (14), das erste Drehzentren (14A, 14B) untereinander verbindet, von denen das eine an einer Seitentür (12) und das andere an einem Fahrzeugaufbau (1) angeordnet ist,
—sowie ein zweites Drehgelenk (16), das zweite Drehzentren (16A, 16B) untereinander verbindet, von denen das eine an der Seitentür (12) und das andere an dem Fahrzeugaufbau (10) angeordnet ist, umfaßt,
—wobei das erste sowie zweite Drehzentrum (14A, 16A) am Fahrzeugaufbau (10) und das erste sowie zweite Drehzentrum (14B, 16B) an der Seitentür (12) jeweils voneinander in der Längsrichtung des Fahrzeugaufbaus (10) bzw. der Seitentür (12) beabstandet sind, dadurch gekennzeichnet,
—daß ein Kabelbaum (18) zur elektrischen Verbindung des Fahrzeugaufbaus (10) und der Seitentür (12) durch wenigstens eines der Drehgelenke (14, 16) hindurch verlegt ist.

2. Seitentür-Gelenkmechanismus nach Anspruch 1, dadurch gekennzeichnet, daß ein Teil des Kabelbaums (18), der sich durch das wenigstens eine Drehgelenk (14, 16) erstreckt sowie am Fahrzeugaufbau (10) befestigt ist, von dem wenigstens einen Drehgelenk (14, 16) in der vertikalen Richtung des Fahrzeugaufbaus (10) um einen Versetzungswert (L) abgesetzt ist.

3. Seitentür Gelenkmechanismus nach Anspruch 2, dadurch gekennzeichnet, daß der Versetzungswert (L) dem Grad entspricht, bis zu dem eine in dem Kabelbaum (18) während einer Drehung des wenigstens einen Drehgelenks (14, 16) um das zugeordnete Drehzentrum (14A, 16A) am Fahrzeug-aufbau (10) erzeugte Verdrehung aufgenommen werden kann.

4. Seitentür-Gelenkmechanismus nach Anspruch 1, 2 oder 3, dadurch gekennzeichnet, daß das wenigstens eine Drehgelenk (14, 16) seine Drehzentren (14A, 14B, 16A, 16B) an einem Frontpfosten (26) und an einer passagierraumseitigen Stelle der Seitentür (12) hat.

5. Seitentür-Gelenkmechanismus nach einem der Ansprüche 1 bis 4, dadurch gekennzeichnet, daß der Endabschnitt des Kabelbaums (1) auf der Seite des Fahrzeugaufbaus jeweils an dem Frontpfosten (26) befestigt ist.

6. Seitentür-Gelenkmechanismus nach einem der Ansprüche 1 bis 5, dadurch gekennzeichnet, daß ein inneres Deckmaterial (32) von im wesentlichen U-förmigen Querschnitt, der zur Außenseite des Passagierraumes offen ist sowie eine obere und untere Rastnase (32A, 32B) hat, die mit einem oberen sowie unteren Ende der Außenfläche des wenigstens einen Drehgelenks (14, 16) an dessen vorderem Ende in Richtung zur Außenseite des Passagierraumes verrastbar sind, an dem wenigstens einen Drehgelenk (14, 16) befestigt ist sowie die Fläche des wenigstens einen Drehgelenks (14, 16) auf der Seite des Passagierraumes abdeckt und daß der Kabelbaum (18) durch ein geschlossenes, zwischen dem inneren Abdeckmaterial (32) sowie dem wenigstens einen Drehgelenk (14, 16) gebildetes Profil (34) hindurch verlegt ist.

7. Seitentür-Gelenkmechanismus nach Anspruch 6, dadurch gekennzeichnet, daß das wenigstens eine Drehgelenk (14, 16) mit U-förmigem, zum Passagierraum hin offenen Querschnitt ausgebildet und der Kabelbaum (18) durch die U-Form hindurch verlegt ist.

8. Seitentür-Gelenkmechanismus nach Anspruch 6, dadurch gekennzeichnet, daß das wenigstens eine Drehgelenk (14, 16) als eine flache Platte ausgebildet ist, die die Öffnung des inneren, einen U-förmigen Querschnitt aufweisenden Abdeckmaterials (32) verschließt.

## Revendications

1. Un mécanisme de porte latérale à charnières pour véhicules automobile comprenant, une chaîne cinématique quadriquè comportant une première biellette rotative (14) reliant des premiers centres de rotation (14A, 14B), l'un d'eux étant disposé sur une porte latérale (12) et l'autre étant disposé sur une caisse de véhicule (10) et une seconde biellette rotative (16) reliant des seconds centres de rotation (16A, 16B), l'un d'eux étant disposé sur ladite porte latérale (12) et l'autre étant disposé sur ladite caisse de véhicule (10), lesdits premier et second centres de rotation (14A, 16A) sur ladite caisse de véhicule (10) et lesdits premier et second centres de rotation (14B, 16B) sur ladite porte latérale (12) étant espacés les uns des autres dans la direction longitudinale de ladite caisse de véhicule (10) ou respectivement de ladite porte latérale (12), dans lequel un faisceau de câble (18) pour relier électriquement ladite caisse de véhicule (10) et ladite porte latérale (12) est câblé à travers au moins l'une desdites biellettes rotatives (14, 16).

2. Un mécanisme pour porte latérale à charnières selon la revendication 1, dans lequel une partie dudit faisceau de câble (18) se prolongeant à travers au moins l'une desdites biellettes rotatives (14, 16) et fixée à ladite caisse du véhicule (10) est décalée d'une distance L à partir d'au moins l'une desdites biellettes rotatives (14, 16) dans la direction verticale de ladite caisse du véhicule (10).

3. Un mécanisme de porte latérale à charnières selon la revendication 2, dans lequel ladite distance de décalage L correspond à la mesure dans laquelle peut être absorbée une torsion qui est créée dans ledit faisceau de câble (18) pendant la rotation d'au moins l'une desdites biellettes rotatives (14, 16) autour dudit centre de rotation correspondant (14A, 16A) sur ladite caisse du véhicule (10).

4. Un mécanisme de porte latérale à charnières selon la revendication 1, 2 ou 3, dans lequel ladite biellette rotative (14, 16) possède ses centres de rotation (14A, 14B, 16A, 16B) sur un montant avant (26) et sur un point du côté de l'habitacle de ladite porte latérale (12).

5. Un mécanisme de porte latérale à charnières selon l'une des revendications 1 à 4, dans lequel la partie extrême dudit faisceau de câble (18) du côté de la caisse du véhicule, est fixée respectivement sur ledit montant avant (26).

6. Un mécanisme de porte latérale à charnières selon l'une des revendications 1 à 5, dans lequel un matériau de finition intérieure (32) présentant en coupe transversale sensiblement une forme en U ouverte vers l'extérieur dudit habitacle et comportant des arrêtoires haut et bas (32A, 32B) qui peuvent venir en contact avec les extrémités haute et basse de la surface extérieure d'au moins l'une desdites biellettes rotatives (14, 16) sur l'extrémité avant de celle-ci dans la direction de l'extérieur dudit habitacle est fixé au moins à ladite biellette rotative (14, 16) en couvrant la surface de ladite biellette rotative (14, 16) du côté de l'habitacle, et en ce que ledit faisceau de câble (18) est câblé à travers une section fermée (34) formée entre ledit matériau de finition intérieure (32) et au moins ladite biellette rotative (14, 16).

7. Un mécanisme de porte latérale à charnières selon la revendication 6, dans lequel au moins ladite biellette rotative (14, 16) présente en coupe transversale une forme en U ouverte vers ledit habitacle extérieur et en ce que ledit faisceau de câble (18) est câble à travers ladite forme en U.

8. Un mécanisme de porte latérale à charnières selon la revendication 6, dans lequel au moins ladite biellette rotative (14, 16) présente la forme d'une plaque plate qui bloque l'ouverture dudit matériau de finition intérieure (32) qui présente en coupe transversale une forme en U.

# F I G.1

# F I G.2

# F I G.3

# F I G.4